# EUROPEAN PATENT APPLICATION

(11) **EP 2 869 612 A1**
(43) Date of publication of application: **06.05.2015**
(21) Application number: 13808503.0
(22) Date of filing: 02.05.2013
(51) Int. Cl.: H04W 8/20

(54) **SERVICE INFORMATION PROVIDING METHOD, DEVICE, AND NETWORK SYSTEM**

(30) Priority: 28.06.2012 CN 201210218522
(71) Applicant: Huawei Technologies Co., Ltd., Longgang District Shenzhen, Guangdong 518129 (CN)
(72) Inventor: WEI, Anni, Shenzhen Guangdong 518129 (CN); XIONG, Chunshan, Shenzhen Guangdong 518129 (CN)
(74) Representative: Epping - Hermann - Fischer
(86) International application number: PCT/CN2013/075087
(87) International publication number: WO 2014/000506

(57) **Abstract**

Embodiments of the present invention provide a method for providing service information, an apparatus, and a network system. The method for providing service information in the embodiments of the present invention includes: receiving, by a radio access network cache, a service request message from a mobile terminal, where the service request message includes a service identifier and moving state information of the mobile terminal; and if the radio access network cache learns, by means of determining, that the radio access network cache stores service information corresponding to the service identifier and the moving state information satisfies a preset activation condition, returning, by the radio access network cache, acknowledgment information to the mobile terminal, and sending the service information to the mobile terminal. The method for providing service information, the apparatus, and the network system provided in the embodiments of the present invention can avoid a problem of frequent switching, of a radio access network cache, caused by an impact of a moving state of a mobile terminal, and ensure continuity of service information sending.

## Description

### CROSS-REFERENCE TO RELATED APPLICATION

This application claims priority to Chinese Patent Application No. 201210218522.X, filed with the Chinese Patent Office on June 28, 2012 and entitled "METHOD FOR PROVIDING SERVICE INFORMATION, APPARATUS, AND NETWORK SYSTEM", which is incorporated herein by reference in its entirety.

### TECHNICAL FIELD

Embodiments of the present invention relate to communications technologies, and in particular, to a method for providing service information, an apparatus, and a network system.

### BACKGROUND

With the extensive use of mobile terminals, such as smartphones and tablet computers, downloading content by using radio access technologies, especially downloading large quantities of hotspot content repeatedly, occupies many network transmission resources. In addition, large quantities of users apply to one hotspot content service source for downloading at the same time, which causes congestion of the service source, and causes many users to fail to perform downloading or downloading time to be excessively long.

To provide a higher access rate and a shorter delay for a user equipment (User Equipment, UE for short) and reduce transmission costs for accessing a source content site, many operators apply a content delivery network (Content Delivery Network, CDN for short) technology to a radio communications system, but because a radio communications network is generally a particularly defined network and is different from a conventional Internet, when the CDN technology is applied to the radio communications network, a feature, such as mobility, of the UE and a specific structure of the radio communications network need to be considered. For example, a cache (Cache) point is generally located on a node, usually an evolved system base station (eNodeB, eNB for short), a radio network controller (Radio Network Controller, RNC for short), or a base station controller (Base Station Controller, BSC for short), close to a UE user plane. A content acceleration effect of a cache point placed on a serving GPRS support node (Servicing GPRS Support Node, SGSN for short) or a Serving Gateway (Serving Gateway, SGW for short) is slightly poor. To better support UE mobility and for ease of charging and management, some operators place a Cache on a packet data network gateway (PDN Gateway, PGW for short) or a gateway GPRS support node (Gateway GPRS Support Node, GGSN for short), or on a dedicated Cache device at an SGi or Gi interface. To get closer to wireless users, a RAN Cache deployed with a Cache device on a radio access network (Radio Access Network, RAN for short) side is provided, that is, a function of the RAN Cache is generally put into a radio access network node, usually an eNB, an RNC, a NodeB, or a BSC.

During the implementation of embodiments of the present invention, the inventor finds that in the prior art, when a user requests a service, if a RAN Cache caches a resource requested by the user, the RAN Cache replies to the user request. In this way, not only a service access rate can be increased, but a network resource of a backbone network can also be saved. However, when the user moves at a high speed, the user may cross an eNB, an RNC, or a BSC and trigger a handover. In this case, if data transmission of a current source RAN Cache is not completed, a conventional handover process is followed: if there is an interface between a source base station and a target base station, uncompleted data needs to be forwarded from the source base station to the target base station through an interface between the base stations or between base station controllers, which increases traffic burden of the interface between the base stations; and if there is no interface between the source base station and the target base station, the data is interrupted, and in addition, handover processing may further increase complexity of a RAN Cache system.

### SUMMARY

Embodiments of the present invention provide a method for providing service information, an apparatus, and a network system, so as to avoid a problem of frequent switching, of a radio access network cache, caused by an impact of a moving state of a mobile terminal, and ensure continuity of service information sending.

According to one aspect, an embodiment of the present invention provides a method for providing service information, including:
receiving, by a radio access network cache, a service request message from a mobile terminal, where the service request message includes a service identifier and moving state information of the mobile terminal; and
if the radio access network cache learns, by means of determining, that the radio access network cache stores service information corresponding to the service identifier and the moving state information satisfies a preset activation condition, returning, by the radio access network cache, acknowledgment information to the mobile terminal, and sending the service information to the mobile terminal.

An embodiment of the present invention further provides a method for activating a radio access network cache, including:
acquiring a service request message of a mobile terminal, where the service request message includes a service identifier; and
adding acquired moving state information of the mobile terminal to the service request message, and sending the service request message to a radio access network cache, so that the radio access network cache determines, according to the service request message, whether to provide service information corresponding to the service identifier for the mobile terminal.

According to another aspect, an embodiment of the present invention provides a radio access network cache, including:
a receiving module, configured to receive a service request message from a mobile terminal, where the service request message includes a service identifier and moving state information of the mobile terminal; and
a processing module, configured to: if learning, by means of determining, that the radio access network cache stores service information corresponding to the service identifier and the moving state information satisfies a preset activation condition, enable the radio access network cache to return acknowledgment information to the mobile terminal, and send the service information to the mobile terminal.

An embodiment of the present invention further provides a radio access network device, including:
an acquiring module, configured to acquire a service request message of a mobile terminal, where the service request message includes a service identifier;
an adding module, configured to add acquired moving state information of the mobile terminal to the service request message; and
a sending module, configured to send the service request message to a radio access network cache, so that the radio access network cache determines, according to the service request message, whether to provide service information corresponding to the service identifier for the mobile terminal.

According to still another aspect, an embodiment of the present invention provides a network system, including the foregoing radio access network cache and radio access network device.

According to the method for providing service information, the apparatus, and the network system provided in the embodiments of the present invention, moving state information of a mobile terminal is added to a service request message with a service identifier of the mobile terminal, and an activation condition is set. When a radio access network cache stores corresponding service information, and a moving state of the mobile terminal can ensure that there is enough time for completely transmitting the service information without being interrupted due to movement of the terminal, a corresponding radio access network cache is activated, otherwise, the service request message of the mobile terminal is forwarded to a content server. The method for providing service information, the apparatus, and the network system can avoid a problem of frequent switching, of a radio access network cache, caused by an impact of a moving state of a mobile terminal, and ensure continuity of service information sending.

### BRIEF DESCRIPTION OF DRAWINGS

FIG. 1 is a schematic flowchart of a method for providing service information according to an embodiment of the present invention;
FIG. 2 is a schematic flowchart of a method for providing service information according to another embodiment of the present invention;
FIG. 3 is a schematic diagram of acquiring moving state information of a mobile terminal in a method for providing service information according to another embodiment of the present invention;
FIG. 4 is a schematic diagram of a moving state of a mobile terminal relative to a RAN device in a method for providing service information according to another embodiment of the present invention;
FIG. 5 is a schematic flowchart of a method for activating a radio access network cache according to another embodiment of the present invention;
FIG. 6 is a schematic structural diagram of a radio access network cache according to another embodiment of the present invention; and
FIG. 7 is a schematic structural diagram of a radio access network device according to another embodiment of the present invention.

### DESCRIPTION OF EMBODIMENTS

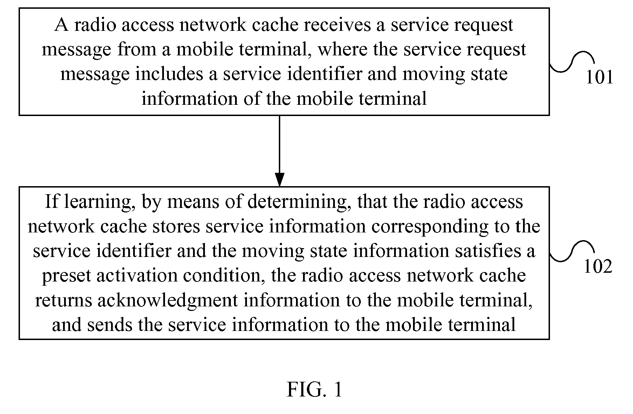

FIG. 1 is a schematic flowchart of a method for providing service information according to an embodiment of the present invention. As shown in FIG. 1, the method for providing service information in this embodiment may include:

Step 101: A radio access network cache receives a service request message from a mobile terminal, where the service request message includes a service identifier and moving state information of the mobile terminal.

In an optional implementation manner of this embodiment, the moving state information of the mobile terminal may include a moving direction and a moving speed.

In another optional implementation manner of this embodiment, the moving state information may be carried in a header field of the service request message, or carried in a uniform resource locator of a Hypertext Transfer Protocol request.

Because the moving direction and the moving speed of the mobile terminal directly affect time for which the radio access network cache can provide a service, the service request message of the mobile terminal carries the moving state information, which is used as a condition for subsequently determining whether the radio access network cache is activated.

Step 102: If learning, by means of determining, that the radio access network cache stores service information corresponding to the service identifier and the moving state information satisfies a preset activation condition, the radio access network cache returns acknowledgment information to the mobile terminal, and sends the service information to the mobile terminal.

A case that the moving state information satisfies the preset activation condition may be that, for example, when the moving direction of the mobile terminal is towards a radio access network device that currently provides a service, and the moving speed of the mobile terminal is relatively low, it may be ensured that there is enough time for the radio access network cache to completely transmit the service information to the mobile terminal; or when the moving direction of the mobile terminal is away from a radio access network device that currently provides a service, but the moving speed of the mobile terminal is relatively low, it may be ensured that the radio access network cache completely transmits the service information to the mobile terminal without being interrupted.

Based on the embodiment described in FIG. 1, the method for providing service information in the embodiment of the present invention may further include that:

If learning, by means of determining, that the radio access network cache does not store the service information corresponding to the service identifier and/or the moving state information does not satisfy the preset activation condition, the radio access network cache forwards the service request message to a content server, so that the content server provides the service information for the mobile terminal.

A case that the moving state information does not satisfy the preset activation condition may be that, for example, when the moving direction of the mobile terminal is towards a radio access network device that currently provides a service, and the moving speed of the mobile terminal is relatively high, a condition for the radio access network cache to completely transmit the service information to the mobile terminal cannot be satisfied; or when the moving direction of the mobile terminal is away from a radio access network device, and the moving speed of the mobile terminal is relatively high, a condition for the radio access network cache to completely transmit the service information to the mobile terminal cannot be satisfied.

In this embodiment, when it is determined, according to moving state information, carried in a service request message, of a mobile terminal, that a radio access network cache stores corresponding service information, and a moving state of the mobile terminal can ensure that there is enough time to completely transmit the service information without being interrupted due to movement of the terminal, a corresponding radio access network cache is activated, otherwise, the service request message of the mobile terminal is forwarded to a content server. The method for providing service information can avoid a problem of frequent switching, of a radio access network cache, caused by an impact of a moving state of a mobile terminal, and ensure continuity of service information sending.

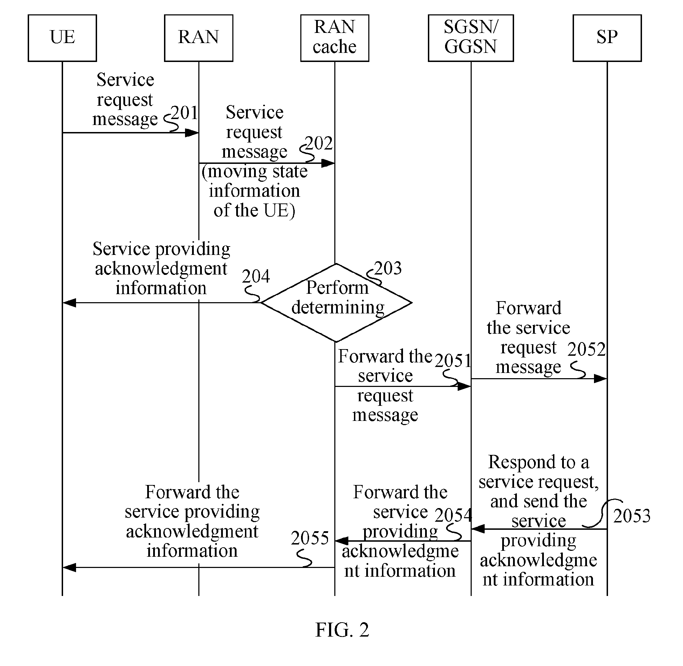

To make the method for providing service information according to the embodiment of the present invention clearer, the following describes in detail the method for providing service information according to the embodiment of the present invention by using a RAN Cache in an RNC or a NodeB as an example. FIG. 2 is a schematic flowchart of a method for providing service information according to another embodiment of the present invention. As shown in FIG. 2, the method for providing service information in this embodiment may include:

Step 201: A RAN receives service request information sent by a UE, where the service request information includes a service identifier corresponding to service information.

For example, the service identifier may be a service identifier corresponding to a video downloading request, and the service request information may be, for example, a Hypertext Transfer Protocol (The Hypertext Transfer Protocol, HTTP for short) GET request:
GET http://sever.example.com/media_720p.flv HTTP/1.1
   Accept: */*
   Proxy-Connection: Keep-Alive
   User-Agent: Mozilla/4.0 (compatible; MSIE 6.0; Windows NT 5.1; SV1)
   Host: sever.example.com
   Cookie:

Step 202: A RAN Cache receives service request information sent by the RAN, where the service request message includes the service identifier and moving state information of the UE.

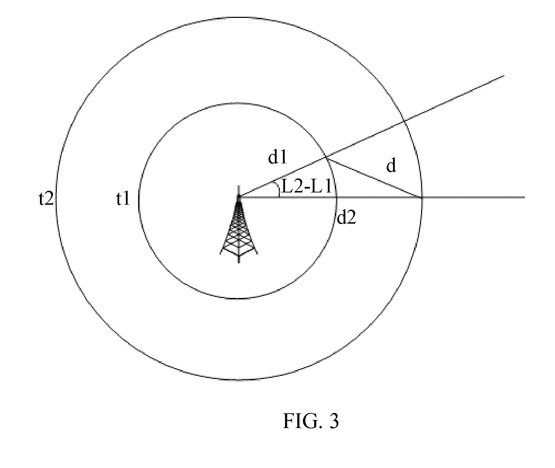

The moving state information of the UE may specifically include a moving direction and a moving speed of the UE. FIG. 3 is a schematic diagram of acquiring moving state information of a mobile terminal in a method for providing service information according to another embodiment of the present invention. As shown in FIG. 3, a method for acquiring the moving direction and the moving speed of the UE may include that: A RAN device, for example, a base station, uses timing advance TA of uplink signals reported by the UE at two time points t1 and t2 to calculate radial distances d1 and d2 between the UE and the base station at the two time points, and the base station collects included angles L1 and L2 between the UE and a smart antenna at the two time points t1 and t2 respectively, and uses the triangle cosine theorem to acquire a distance d that the UE moves within a time period t2-t1. In this case, a speed value is d/(t2-t1), and the moving direction of the UE, that is, whether the UE moves away from the base station or towards the base station, may be determined by means of positivity or negativity of a difference between d1 and d2.

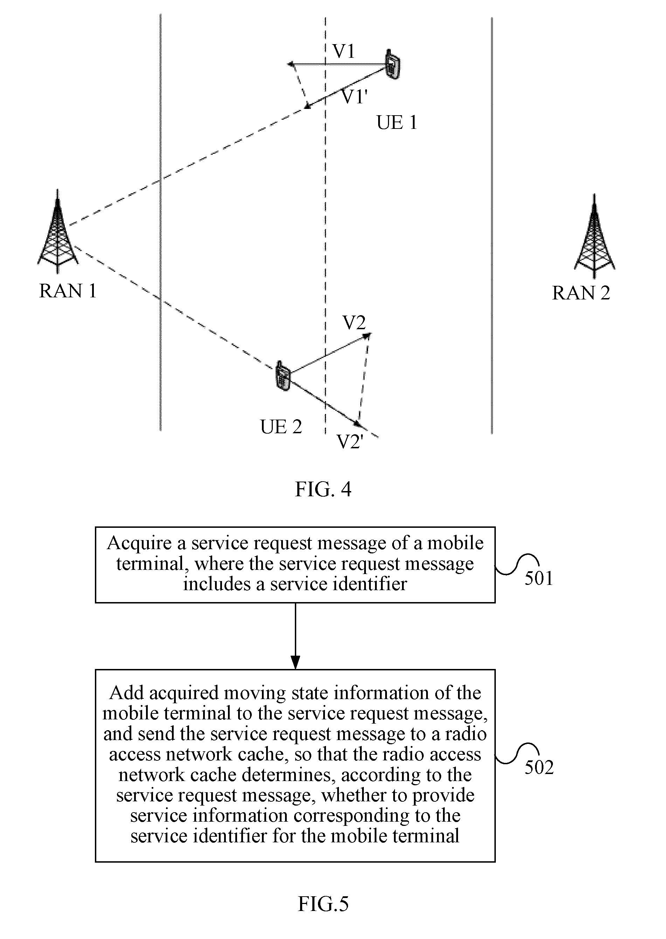

FIG. 4 is a schematic diagram of a moving state of a mobile terminal relative to a RAN device in a method for providing service information according to another embodiment of the present invention. As shown in FIG. 4, a UE1 and a UE2 are located between a RAN1 and a RAN 2, a speed of the UE1 in this case is V1, a speed of the UE1 relative to the RAN1 is V1', the UE1 moves in a direction towards the RAN1, and then it is considered that the speed relative to the RAN 1 is positive; a speed of the UE2 is V2, a speed of the UE2 relative to the RAN1 is V2', the UE2 moves in a direction away from the RAN1, and then it is considered that the speed relative to the RAN1 is negative; absolute values of V1' and V2' are moving speeds of the UEs, and positivity or negativity of V1' and V2' indicates moving directions of the UEs.

In this step, a RAN device, for example, a base station, needs to carry a moving state of the UE in the service request message of the UE, where the moving state information may be carried in a header field of the service request message.

The moving state information may be carried in the header field of the service request message, for example, an HTTP Warning header field, where a format of the HTTP Warning header field may be, for example, as follows:
Warning = "Warning" ":" l#warning-value
   warning-value = warn-code SP warn-agent SP warn-text [SP warn-date]
   warn-code = 3DIGIT
   warn-agent = ( host[":" port]) | pseudonym
   ; the name or pseudonym of the server adding
   ; the Warning header, for use in debugging
   warn-text = quoted-string
   warn-date = <"> HTTP-date <">

Service request information that carries the moving state information in the Warning header field of the service request message may be, for example, as follows:
GET http://sever.example.com/media_720p.flv HTTP/1.1
Accept: */*
Proxy-Connection: Keep-Alive
User-Agent: Mozilla/4.0 (compatible; MSIE 6.0; Windows NT 5.1; SV1)
Host: sever.example.com
Warning: 1#117 UE1 V1' "052912"
Cookie:
   where Warning: 1#117 UE1 V1' "052912" indicates that a current moving state of the UE1 is V1'.

Alternatively, service request information that carries the moving state information in a uniform resource locator (Uniform Resource Locator, URL for short) of an HTTP request may be, for example, as follows:
GET http://sever.example.com/UE1 V1'/media_720p.flv HTTP/1.1
Accept: */*
Proxy-Connection: Keep-Alive
User-Agent: Mozilla/4.0 (compatible; MSIE 6.0; Windows NT 5.1; SV1)
Host: sever.example.com
Cookie:

Step 203: If learning, by means of determining, that the RAN Cache stores service information corresponding to the service identifier and the moving state information of the UE satisfies a preset activation condition, perform step 204, and if learning, by means of determining, that the RAN Cache does not store the service information corresponding to the service identifier and/or the moving state information does not satisfy the preset activation condition, perform step 205.

The activation condition preset by the RAN Cache may be, for example, as follows: if it is determined that the moving direction of the UE is towards a RAN device that currently provides a service, a speed threshold is set to V, and if the speed of the UE relative to the RAN device is lower than V, the RAN Cache is started, otherwise, the RAN Cache is not started; and if it is determined that the moving direction of the UE is away from the RAN device that currently provides a service, another speed threshold is set to V*, and if the speed of the UE relative to the RAN device is lower than V, the RAN Cache is started, otherwise, the RAN Cache is not started.

Step 204: The RAN Cache returns service providing acknowledgment information to the UE, and sends the service information to the UE.

Step 205: The RAN Cache forwards the service request message to a content server, so that the content server provides the service information for the mobile terminal.

Step 205 may be specifically divided into:

Step 2051: The RAN Cache forwards the service request message to a gateway node (SGSN/GGSN).

Step 2052: The gateway node (SGSN/GGSN) then forwards the service request message to a service provider (Service Provider, SP for short).

Step 2053: The SP responds to the service request message, and sends the service providing acknowledgment information to the gateway node (SGSN/GGSN).

Step 2054: The gateway node (SGSN/GGSN) forwards the service providing acknowledgment information to the RAN Cache.

Step 2055: The RAN Cache forwards the service providing acknowledgment information to the UE.

In this embodiment, when the moving direction of the UE is towards the RAN device that currently provides a service, if |V1'|<V and a requested resource media_720p.flv is cached in the RAN Cache, the RAN Cache is started, and the RAN Cache responds to a request of a terminal, and sends service information of the media_720p.flv to the UE; and if |V1'|>V or the requested resource media_720p.flv is not cached in the RAN Cache, or |V1'|>V and the requested resource media_720p.flv is not cached in the RAN Cache, the RAN Cache is not started, and the RAN Cache forwards the service request information of the UE to a content server. When the moving direction of the UE is away from the RAN device that currently provides a service, if |V1'|<V* and the requested resource media_720p.flv is cached in the RAN Cache, the RAN Cache is started, and the RAN Cache responds to a request of the terminal, and sends the service information of the media_720p.flv to the UE; and if |V1'|>V* or the requested resource media_720p.flv is not cached in the RAN Cache, or |V1'|>V* and the requested resource media_720p.flv is not cached in the RAN Cache, the RAN Cache is not started, and the RAN Cache forwards the service request information of the UE to the content server. It should be noted that, if a moving state of the UE is added to a URL of an HTTP request, the RAN Cache deletes the moving state information, carried in the service request information, of the UE, and then forwards the service request information to the content server; and if the moving state of the UE is added to a header field of the service request message, the moving state information of the UE may or may not be deleted.

To sum up, when service information requested by a UE is cached in a RAN Cache corresponding to the UE, and a moving state of the UE satisfies an activation condition preset by the RAN Cache, that is, when a moving direction and speed of the UE can ensure that the service information is completely transmitted without being interrupted due to movement of the UE, the RAN Cache responds to a request of a terminal, and sends, to the UE, the service information requested by the UE; and when the service information requested by the UE is not cached in the RAN Cache corresponding to the UE and/or moving state information does not satisfy the activation condition preset by the RAN Cache, the RAN Cache forwards the service request information of the UE to a content server, which can avoid a problem of frequent switching, of a radio access network cache, caused by an impact of a moving state of a mobile terminal, and ensure continuity of service information sending.

FIG. 5 is a schematic flowchart of a method for activating a radio access network cache according to another embodiment of the present invention. As shown in FIG. 5, the method for activating a radio access network cache in this embodiment may include:

Step 501: Acquire a service request message of a mobile terminal, where the service request message includes a service identifier.

Step 502: Add acquired moving state information of the mobile terminal to the service request message, and send the service request message to a radio access network cache, so that the radio access network cache determines, according to the service request message, whether to provide service information corresponding to the service identifier for the mobile terminal.

In an optional implementation manner of this embodiment, the moving state information includes a moving direction and a moving speed.

In another optional implementation manner of this embodiment, the moving state information is added to a header field of the service request message, or added to a uniform resource locator of a Hypertext Transfer Protocol request.

In this embodiment, acquired moving state information of a mobile terminal is added to a service request message and the service request message is sent to a radio access network cache, so that the radio access network cache determines, according to the service request message, whether to provide service information corresponding to a service identifier for the mobile terminal. Because a moving direction and a moving speed of a mobile terminal directly affect time for which a radio access network cache can provide a service, the method for activating a radio access network cache according to the embodiment of the present invention can avoid a problem of frequent switching, of the radio access network cache, caused by an impact of a moving state of the mobile terminal, and ensure continuity of service information sending.

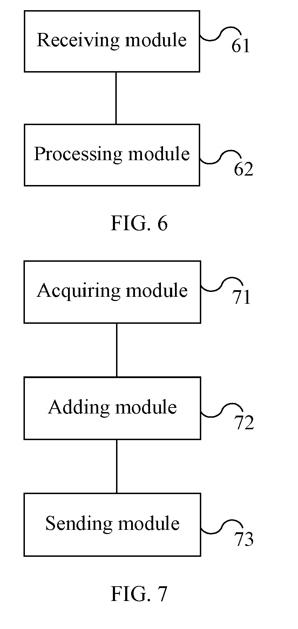

FIG. 6 is a schematic structural diagram of a radio access network cache according to another embodiment of the present invention. As shown in FIG. 6, the radio access network cache in this embodiment may include a receiving module 61 and a processing module 62, where the receiving module 61 is configured to receive a service request message from a mobile terminal, where the service request message includes a service identifier and moving state information of the mobile terminal; and the processing module 62 is configured to: if learning, by means of determining, that the radio access network cache stores service information corresponding to the service identifier and the moving state information satisfies a preset activation condition, enable the radio access network cache to return acknowledgment information to the mobile terminal, and send the service information to the mobile terminal.

In an optional implementation manner of this embodiment, the processing module 62 may further be configured to:
if learning, by means of determining, that the radio access network cache does not store the service information corresponding to the service identifier and/or the moving state information does not satisfy the preset activation condition, enable the radio access network cache to forward the service request message to a content server, so that the content server provides the service information for the mobile terminal.

In another optional implementation manner of this embodiment, the moving state information includes a moving direction and a moving speed.

In this embodiment, a processing module 62 determines, according to a service identifier and moving state information in a service request message of a mobile terminal, whether to provide a service for a corresponding mobile terminal. Because a moving direction and a moving speed of a mobile terminal directly affect time for which a radio access network cache can provide a service, the radio access network cache provided in the embodiment of the present invention can avoid a problem of frequent switching, of the radio access network cache, caused by an impact of a moving state of the mobile terminal, and ensure continuity of service information sending.

FIG. 7 is a schematic structural diagram of a radio access network device according to another embodiment of the present invention. As shown in FIG. 7, the radio access network device in this embodiment may include an acquiring module 71, an adding module 72, and a sending module 73, where the acquiring module 71 is configured to acquire a service request message of a mobile terminal, where the service request message includes a service identifier; the adding module 72 is configured to add acquired moving state information of the mobile terminal to the service request message; and the sending module 73 is configured to send the service request message to a radio access network cache, so that the radio access network cache determines, according to the service request message, whether to provide service information corresponding to the service identifier for the mobile terminal.

In an optional implementation manner of this embodiment, the adding module 72 may specifically be configured to add the acquired moving state information of the mobile terminal to a header field of the service request message or to a uniform resource locator of a Hypertext Transfer Protocol request.

In this embodiment, an adding module 72 adds acquired moving state information of a mobile terminal to a service request message sent by the mobile terminal, and a sending module 73 sends the service request message to a radio access network cache, so that the radio access network cache determines, according to the service request message, whether to provide service information corresponding to the service identifier for the mobile terminal. Because a moving direction and a moving speed of a mobile terminal directly affect time for which a radio access network cache can provide a service, the radio access network device provided in the embodiment of the present invention can avoid a problem of frequent switching, of the radio access network cache, caused by an impact of a moving state of the mobile terminal, and ensure continuity of service information sending.

Another embodiment of the present invention further provides a network system, which may specifically include the foregoing radio access network cache and the foregoing radio access network device.

To sum up, according to the method for providing service information, the apparatus, and the network system provided in the embodiments of the present invention, moving state information of a UE is added to a service request message of the UE, and an activation condition of a RAN Cache is set. Because a moving direction and a moving speed of a mobile terminal directly affect time for which a radio access network cache can provide a service, the RAN Cache determines, according to the preset activation condition, whether to provide a service for a corresponding UE, which can avoid a problem of frequent switching, of the radio access network cache, caused by an impact of a moving state of the mobile terminal, and ensure continuity of service information sending.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A method for providing service information, comprising:
receiving, by a radio access network cache, a service request message from a mobile terminal, wherein the service request message comprises a service identifier and moving state information of the mobile terminal; and
if the radio access network cache learns, by means of determining, that the radio access network cache stores service information corresponding to the service identifier and the moving state information satisfies a preset activation condition, returning, by the radio access network cache, acknowledgment information to the mobile terminal, and sending the service information to the mobile terminal.

2. The method according to claim 1, wherein the method further comprises:
if the radio access network cache learns, by means of determining, that the radio access network cache does not store the service information corresponding to the service identifier and/or the moving state information does not satisfy the preset activation condition, forwarding, by the radio access network cache, the service request message to a content server, so that the content server provides the service information for the mobile terminal.

3. The method according to claim 1 or 2, wherein the moving state information comprises a moving direction and a moving speed.

4. The method according to claim 1 or 2, wherein the moving state information is carried in a header field of the service request message, or carried in a uniform resource locator of a Hypertext Transfer Protocol request.

5. A method for activating a radio access network cache, comprising:
acquiring a service request message of a mobile terminal, wherein the service request message comprises a service identifier; and
adding acquired moving state information of the mobile terminal to the service request message, and sending the service request message to a radio access network cache, so that the radio access network cache determines, according to the service request message, whether to provide service information corresponding to the service identifier for the mobile terminal.

6. The method according to claim 5, wherein the moving state information comprises a moving direction and a moving speed.

7. The method according to claim 5 or 6, wherein the moving state information is added to a header field of the service request message, or added to a uniform resource locator of a Hypertext Transfer Protocol request.

8. A radio access network cache, comprising:
a receiving module, configured to receive a service request message from a mobile terminal, wherein the service request message comprises a service identifier and moving state information of the mobile terminal; and
a processing module, configured to: if learning, by means of determining, that the radio access network cache stores service information corresponding to the service identifier and the moving state information satisfies a preset activation condition, enable the radio access network cache to return acknowledgment information to the mobile terminal, and send the service information to the mobile terminal.

9. The radio access network cache according to claim 8, wherein the processing module is further configured to:
if learning, by means of determining, that the radio access network cache does not store the service information corresponding to the service identifier and/or the moving state information does not satisfy the preset activation condition, enable the radio access network cache to forward the service request message to a content server, so that the content server provides the service information for the mobile terminal.

10. The radio access network cache according to claim 8 or 9, wherein the moving state information comprises a moving direction and a moving speed.

11. A radio access network device, comprising:
an acquiring module, configured to acquire a service request message of a mobile terminal, wherein the service request message comprises a service identifier;
an adding module, configured to add acquired moving state information of the mobile terminal to the service request message; and
a sending module, configured to send the service request message to a radio access network cache, so that the radio access network cache determines, according to the service request message, whether to provide service information corresponding to the service identifier for the mobile terminal.

12. The radio access network device according to claim 11, wherein the adding module is specifically configured to add the acquired moving state information of the mobile terminal to a header field of the service request message or to a uniform resource locator of a Hypertext Transfer Protocol request.

13. A network system, comprising the radio access network cache according to any one of claims 8 to 10 and the radio access network device according to claim 11 or 12.
